(19) **Europäisches Patentamt / European Patent Office / Office européen des brevets**

(11) **EP 2 303 971 B1**

(12) **FASCICULE DE BREVET EUROPEEN**

(45) Date de publication et mention de la délivrance du brevet:
**17.10.2012 Bulletin 2012/42**

(51) Int Cl.:
*C09C 1/02* (2006.01)    *B01F 3/00* (2006.01)
*C01F 11/00* (2006.01)    *B02C 23/06* (2006.01)
*C01F 11/18* (2006.01)

(21) Numéro de dépôt: **09794049.8**

(22) Date de dépôt: **16.06.2009**

(86) Numéro de dépôt international:
**PCT/IB2009/006003**

(87) Numéro de publication internationale:
**WO 2010/004392 (14.01.2010 Gazette 2010/02)**

(54) **UTILISATION DE POLYMÈRES (MÉTH)ACRYLIQUES DANS UN PROCÉDÉ DE FABRICATION D'UNE SUSPENSION AQUEUSE DE CARBONATE DE CALCIUM**

VERWENDUNG VON (METH)ACRYLPOLYMEREN IN EINEM VERFAHREN ZUR HERSTELLUNG EINER WÄSSRIGEN CALCIUMCARBONATSUSPENSION

USE OF (METH)ACRYLIC POLYMERS IN A METHOD FOR MANUFACTURING A CALCIUM CARBONATE AQUEOUS SUSPENSION

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **07.07.2008 FR 0803855**

(43) Date de publication de la demande:
**06.04.2011 Bulletin 2011/14**

(73) Titulaire: **Coatex S.a.S**
**69730 Genay (FR)**

(72) Inventeurs:
• **MONGOIN, Jacques**
  **F-69650 Quincieu (FR)**
• **JACQUEMET, Christian**
  **69005 Lyon (FR)**

• **SUAU, Jean-Marc**
  **F-69480 Lucenay (FR)**

(74) Mandataire: **Tetaz, Franck Claude Edouard et al**
**Cabinet Regimbeau**
**20, rue de Chazelles**
**75847 Paris Cedex 17 (FR)**

(56) Documents cités:
**WO-A2-02/49766**    **FR-A1- 2 842 814**
**JP-A- 2000 239 595**    **US-A1- 2007 197 747**

• **ANONYMOUS: "Technical Information - Targeted Dispersants for Bulk Calcium Carbonate Slurry" APPLIED CHEMICAL ANWENDUNGS TECHNIK, [Online] 24 août 2007 (2007-08-24), pages 1-3, XP002516974 Extrait de l'Internet: URL:http://www.acat.com/_files/datasheets/722/Dispersants_for_CCS(TMB-EN).pdf>**

**Description**

Le carbonate de calcium naturel broyé -ou OCC- est un pigment minéral communément mis en oeuvre dans les sauces de couchage destinées à recouvrir la feuille de papier, et à conférer à celle-ci certaines propriétés optiques telle que l'opacité. Ce carbonate de calcium est initialement mis en oeuvre sous forme d'une suspension aqueuse, plus simple à transporter, à manipuler et à transvaser qu'une poudre sèche. Ladite suspension entre ensuite dans la composition d'une sauce de couchage, cette dernière servant à coucher la feuille de papier.

Une méthode pour fabriquer une telle suspension consiste à broyer dans l'eau ledit carbonate de calcium en présence d'un agent d'aide au broyage et ce, jusqu'à obtenir une certaine granulométrie, c'est-à-dire une certaine répartition des tailles de particules. Au cours de cette étape, on met en oeuvre un agent dit « d'aide au broyage », dont la fonction est de faciliter l'action mécanique du broyage. Il s'agit en général d'un homopolymère ou d'un copolymère de l'acide acrylique, obtenu par des procédés de polymérisation classiques en émulsion ou en solution (voir notamment les documents FR 2539137, FR 2 683 536, FR 2 683 537, FR 2 683 53 8, FR 2 683 539, FR 2 683 532, FR 2 683 533).

WO02/49766 décrit l'utilisation d'homopolymères et/ou de copolymères de l'acide acrylique ayant un poids moléculaire compris entre 5000 et 25000 dans des procédés de broyage pour fabriquer des suspensions minérales notamment de carbonate de calcium.

US2007/197747 décrit l'utilisation d'homopolymères et/ou de copolymères de l'acide acrylique ayant un poids moléculaire compris entre 1000 et 20000 dans des procédés de broyage de carbonate de calcium.

« Technical information-Targeted Dispersants for Bulk Calcium Carbonate Slurry » Applied Chemical Anwendungs Technik (www.acat.com) décrit l'utilisation de dispersants dans la préparation de suspensions de carbonate de calcium.

Dans un second temps, on augmente l'extrait sec de cette suspension (ou quantité en poids sec de carbonate de calcium par rapport au poids total de la suspension) par élimination de l'eau: cette étape, sans effet sur la granulométrie du carbonate de calcium, a pour objectif de délivrer un produit final le plus riche possible en matière minérale.

Il est important de disposer alors d'une suspension aqueuse de matière minérale qui reste suffisamment fluide au cours du temps. Cette propriété peut être appréhendée très simplement à travers des mesures de viscosités Brookfield™ de la suspension, immédiatement après broyage, puis 8 jours après et ce, sans pour autant avoir agité le milieu. On met ainsi à jour d'éventuelles dérives viscosimétriques que l'homme du métier cherchera à éviter : il s'agit d'une partie du problème technique résolu par la présente invention.

L'autre contrainte intégrée par la présente invention est l'obtention d'une suspension de carbonate de calcium conduisant à une opacité la plus élevée possible, cette propriété étant recherchée au niveau de la feuille de papier couchée. Or, on sait depuis longtemps que l'opacité est reliée à une certaine distribution des tailles de particules individuelles de carbonate de calcium, au sein de la suspension aqueuse. Cette distribution doit être la plus « étroite » possible ; on parle aussi d'une répartition granulométrique « verticale », au regard de la forme de la courbe obtenue (pourcentage en poids des particules ayant un diamètre donné en fonction du diamètre).

La « verticalité » ou « étroitesse » de la distribution des tailles de particules est reflétée par « le facteur de pente », f, paramètre bien connu de l'homme du métier. Ce facteur de pente est calculé comme étant égal au rapport entre le pourcentage en poids de particules dont le diamètre est inférieur à un diamètre $d_1$ et le pourcentage en poids des particules dont le diamètre est inférieur à un autre diamètre $d_2$, soit :

$$f = (d_1 / d_2) * 100$$

Plus le facteur de pente est important, plus la distribution des tailles de particules est « étroite » et meilleure sera l'opacité du papier couché final. Cette idée est notamment soutenue dans le document « Pigment concepts for improved paper and print properties » (P. Burri, ATIP Conference, June 23, 2000 Tour), tout particulièrement en page 4.

On peut aussi citer le document WO 03 / 089524 qui, même s'il se réfère à des suspensions aqueuses de kaolin, indique un facteur de pente 100 * ($d_{30}$ / $d_{70}$) au moins égal à 39, ce qui conduit à un papier couché à partir d'une sauce réalisée avec ledit kaolin, présentant des propriétés optiques améliorées.

De même, le document EP 0 894 836 décrit une suspension aqueuse de GCC, dont une des caractéristiques réside dans un facteur de pente ($d_{50}$ / $d_{20}$) compris entre 1,5 et 2, préférentiellement entre 1,5 et 1,75. Compte tenue de la définition particulière donnée au facteur de pente, cette invention s'oriente bien vers une répartition étroite des tailles de particules : il est aussi indiqué que l'opacité des produits finaux s'en trouve améliorée.

Le document EP 1 579 070 décrit un mélange de deux pigments carbonatés dont l'un au moins est un GCC ayant un facteur de pente 100 * ($d_{30}$ / $d_{70}$) compris entre 30 et 45, préférentiellement entre 35 et 45, et très préférentiellement entre 37 et 45 ; l'opacité d'un papier couché contenant ces mélanges est alors améliorée (voir tableau 5).

Enfin, le document WO 2007 / 031870 décrit le broyage d'un carbonate de calcium précipité ou PCC avec un GCC, en milieu aqueux, le pigment co-broyé obtenu ayant un facteur de pente $100 * (d_{30} / d_{70})$ supérieur à 30, préférentiellement 40, très préférentiellement 45 ; l'opacité du papier final est alors accentuée (voir tableau 2).

Parallèlement à cette nécessité de broyer initialement le carbonate de calcium pour obtenir un facteur de pente élevé, l'homme du métier cherche à maximiser l'extrait sec final à travers la deuxième étape d'élimination de l'eau ; or, cette dernière est particulièrement coûteuse en terme d'énergie. Idéalement, il faudrait donc broyer le carbonate de calcium jusqu'à obtenir un extrait sec le plus élevé possible pour minimiser l'étape d'évaporation de l'eau, tout en conservant un facteur de pente élevé en vue de doper l'opacité du papier couché. Malheureusement, ces deux exigences sont contradictoires.

En effet, plus on broye le carbonate de calcium à un extrait sec élevé, plus on dégrade le facteur de pente. Ceci est exprimé très clairement dans le document WO 2004 /026973 qui indique (page 2, lignes 6-8) que l'obtention d'une répartition étroite des tailles de particules de GCC s'oppose à un broyage à extrait sec élevé, puisque celui-ci conduit notamment une augmentation de la fraction de particules les plus fines et donc à un élargissement de la distribution des tailles de particules. Aussi, l'homme du métier qui cherche à la fois à minimiser l'étape de concentration finale (c'est-à-dire à broyer initialement à la concentration la plus élevée possible), tout en visant des propriétés d'opacité améliorées au final (au moyen d'un facteur de pente élevé et non dégradé par un broyage à concentration trop élevée) se trouve aujourd'hui face à une situation de compromis non satisfaisante.

Poursuivant ses recherches pour offrir à l'homme du métier une solution permettant :

- d'obtenir un facteur de pente plus élevé qu'avec les agents d'aide au broyage de l'art antérieur, et donc une opacité améliorée,
- tout en broyant initialement à la même concentration, et en éliminant l'eau jusqu'au même extrait sec final,
- de disposer d'une suspension aqueuse finale stable dans le temps,

la Demanderesse a mis au point l'utilisation dans un procédé de fabrication d'une suspension aqueuse de carbonate de calcium naturel à travers une étape de broyage et une étape de concentration en milieu aqueux, d'un homopolymère et/ou d'un copolymère de l'acide (méth)acrylique caractérisé :

- en ce qu'il est mis en oeuvre pendant l'étape de broyage,
- en ce qu'il présente un poids moléculaire compris entre 8 000 g/mol et 15 000 g/mol, préférentiellement entre 8 000 g/mol et 12 000 g/mol,
- et en ce qu'il présente une teneur molaire en chaînes polymériques de poids moléculaire inférieur à 3 000 g/mol inférieure à 20 %, préférentiellement 15 %, très préférentiellement 10 %

comme agent activateur d'opacité.

On indique que dans toute la présente Demande, les poids moléculaires, de même que les teneurs molaires en chaînes polymériques dont le poids moléculaire est inférieur à une certaine valeur, sont déterminés selon une méthode particulière telle que décrite en introduction des exemples.

De plus, à travers l'expression « agent activateur d'opacité », il faut entendre un agent qui, lorsqu'il est mis en oeuvre dans le procédé décrit ci-dessus, pour fabriquer une suspension aqueuse de carbonate de calcium, elle-même utilisée pour formuler une sauce de couchage, cette dernière étant destinée à être appliquée sur une feuille de papier, conduit à une feuille dont l'opacité est améliorée. Concrètement, l'homme du métier a identifié depuis de nombreuses années un paramètre qui, mesuré au niveau de la suspension de carbonate de calcium, évolue dans le même sens que l'opacité de la feuille de papier couché : il s'agit du coefficient de diffusion de la lumière de la suspension (S exprimé en $m^2$/kg), celle-ci étant appliquée sur un support. Dans la présente Demande, on s'appuiera notamment sur la mesure de ce coefficient S au niveau de la suspension aqueuse de carbonate de calcium (la méthode de mesure du coefficient S est indiquée dans le document FR 2 885 906).

Aussi, et de manière surprenante, par rapport à un art antérieur reposant sur la mise en oeuvre d'un agent d'aide au broyage classique, c'est-à-dire d'un homopolymère et/ou d'un copolymère de l'acide (méth)acrylique ne réunissant pas les 2 conditions précédentes, les homopolymères et les copolymères de l'acide (méth)acrylique selon l'invention permettent :

- tout en broyant au même extrait sec que pour l'art antérieur,
- d'obtenir un facteur de pente plus élevé $100 * (d_{25} / d_{75})$ et donc une meilleure opacité (S),
- tout en fabriquant aussi des suspensions aqueuses stables dans le temps.

Un des mérites de la Demanderesse est d'avoir su identifier que le choix d'une gamme de poids moléculaires particuliers, en combinaison avec une fraction limitée de chaînes polymériques de bas poids moléculaire, constituait la combinaison optimale pour obtenir une suspension aqueuse à la fois stable et présentant un facteur de pente important, synonyme d'une opacité améliorée. En outre, il est aisé pour l'homme du métier de fabriquer des polymères présentant cette combinaison de caractéristiques, notamment à partir des techniques dites de « séparation », et des méthodes de polymérisation radicalaire contrôlée telle que notamment la technique dite « RAFT » (transfert réversible par addition fragmentation).

Les premières sont des méthodes relativement anciennes (début des années 80), et qui visent à « purifier » le polymère tel qu'obtenu après sa synthèse. Elles mettent en oeuvre des étapes permettant d'isoler des populations de chaînes moléculaires polymériques présentant un poids moléculaire donné (à travers un choix de solvants et de températures appropriés) et conduisent à l'obtention d'un poids moléculaire donné d'une part, et à la teneur choisie pour les chaînes polymériques présentant par exemple un poids moléculaire inférieur à une certaine limite. L'homme du métier pourra notamment se référer au document US 4 507 422.

Les secondes sont des techniques de fabrication qui permettent, notamment par la mise en oeuvre de catalyseurs particuliers, de contrôler la distribution des poids moléculaires au cours de la réaction de polymérisation. Le choix des conditions de synthèse (tel que notamment le ratio catalyseur / monomères mis en oeuvre) permet à l'homme du métier d'atteindre à la fois un poids moléculaire donné, ainsi qu'une teneur en chaînes polymériques dont le poids moléculaire est inférieur à une certaine limite. L'homme du métier pourra notamment se reporter aux documents WO 02 / 070571, WO 2004 /014967 et WO 2005 / 095466 (dont le contenu est incorporé en référence dans la présente demande, et notamment en relation avec la revendication 4 de la présente demande), de même qu'aux publications « Dispersion of calcite by poly(sodium acrylate) prepared by reversible addition-fragmentation chain transfer (RAFT) polymerization » (Polymer (2005, 46(19), 2005, pp 8565-8572) et « Synthesis and Characterization of Poly(acrylic acid) Produced by RAFT Polymerization. Application as a Very Efficient Dispersant of CaCO3,Kaolin, and TiO2 » (Macromolecules, 36(9), 2003, pp 3066-3077).

En outre, il est important de souligner qu'aucun des documents précités à l'égard des méthodes de séparation et de polymérisation radicalaire contrôlée, ne se rapporte de manière particulière à un procédé de fabrication de carbonate de calcium, par broyage puis concentration en milieu aqueux. On notera ici qu'il s'agit d'un procédé très particulier, tel que présenté dans le document WO 02 / 49765, où un polymère acrylique présentant des taux de neutralisation très spécifiques en cations mono- et divalents conduit à une suspension aqueuse avec une faible quantité d'agent de broyage non adsorbé à la surface du carbonate de calcium. Par ailleurs, aucun des documents précités sur les techniques de séparation et de polymérisation radicalaire contrôlée ne renseigne quant à la capacité d'un homopolymère ou d'un copolymère de l'acide (méth)acrylique d'être un bon activateur de l'opacité, si ledit homopolymère réunit les 2 conditions particulières objet de la présente invention.

Aussi, un premier objet de l'invention consiste en l'utilisation, dans un procédé de fabrication d'une suspension aqueuse de carbonate de calcium naturel à travers :

    a) une étape de broyage,
    b) et éventuellement une étape de concentration en milieu aqueux,

d'un homopolymère et/ou d'un copolymère de l'acide (méth)acrylique caractérisé :

- en ce qu'il est mis en oeuvre pendant l'étape de broyage,
- en ce qu'il présente un poids moléculaire compris entre 8 000 g/mol et 15 000 g/mol, préférentiellement entre 8 000 g/mol et 12 000 g/mol,
- et en ce qu'il présente une teneur molaire en chaînes polymériques de poids moléculaire inférieur à 3 000 g/mol inférieure à 20 %, préférentiellement 15 %, très préférentiellement 10 %

comme agent activateur d'opacité.

Dans une première variante, cette utilisation est aussi caractérisée en ce que ledit homopolymère et/ou copolymère de l'acide (méth)acrylique est obtenu par polymérisation radicalaire en émulsion ou en solution, suivi par au moins une étape de séparation statique ou dynamique, ladite étape de séparation mettant en oeuvre un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

Dans une seconde variante, cette utilisation est aussi caractérisée en ce que ledit homopolymère et/ou copolymère de l'acide (méth)acrylique est obtenu par polymérisation radicalaire contrôlée, préférentiellement par polymérisation par transfert réversible par addition fragmentation (RAFT).

Il est important de souligner que l'homme du métier dispose, à partir de ses connaissances et de l'état de la technique, de tous les éléments nécessaires pour fabriquer un polymère vérifiant la double caractéristique objet de la présente Demande : en ce sens, il est à-même de synthétiser les polymères objets de la présente invention. Ceci est notamment souligné dans l'état de la technique relatif à la fabrication de polymères acryliques, en vue de contrôler à la fois leur poids moléculaire et leur indice de polymolécularité (et donc naturellement le taux d'oligomères soit la proportion de chaînes polymériques dont le poids moléculaire est inférieur à une certaine valeur). On pourra se reporter aux documents précités (voir haut de la page précédente).

Dans cette seconde variante, cette utilisation est aussi caractérisée en ce que la polymérisation par transfert réversible par addition fragmentation (RAFT) met en oeuvre au moins un agent de transfert de chaîne, tel que revendiqué dans les documents WO 02 / 070571, WO 2004 / 014967 et WO 2005 / 095466 (dont le contenu est incorporé en référence dans la présente demande, et notamment en relation avec la revendication 4 de la présente demande).

De manière générale, cette utilisation est aussi caractérisée en ce que ledit homopolymère et/ou copolymère de l'acide (méth)acrylique est totalement acide, ou totalement ou partiellement neutralisé par un agent de neutralisation choisi parmi les hydroxydes de sodium, de potassium, les hydroxydes et/ou oxydes de calcium, de magnésium, l'ammoniaque, ou leurs mélanges, préférentiellement par un agent de neutralisation choisi parmi l'hydroxyde de sodium, de potassium, l'ammoniaque, ou leurs mélanges, très préférentiellement par un agent de neutralisation qui est l'hydroxyde de sodium.

De manière générale, cette utilisation est caractérisée en ce que, outre l'acide (méth)acrylique, ledit copolymère de l'acide (méth)acrylique contient un autre monomère choisi parmi l'anhydride (méth)acrylique, le (méth)acrylamide, les esters (méth)acryliques et préférentiellement parmi les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés, le styrène, l'alpha-méthylstyrène, le styrène sulfonate, ou l'acide acrylamido-2-méthyl-2-propane-sulfonique, les phosphates d'acrylate et de méthacrylate d'éthylène glycol, et leurs mélanges, et en ce que cet autre monomère est préférentiellement l'acrylamide.

Cette utilisation est aussi caractérisée en ce que ledit homopolymère et/ou copolymère de l'acide (méth)acrylique est mis en oeuvre à raison de 0,1 à 1,0 %, préférentiellement de 0,2 à 0,6 % en poids sec, par rapport au poids sec de carbonate de calcium.

Cette utilisation est aussi caractérisée en ce que, outre ledit homopolymère et/ou copolymère de l'acide (méth) acrylique, un autre homopolymère et/ou copolymère de l'acide (méth)acrylique est mis en oeuvre conjointement pendant l'étape de concentration b).

Cette utilisation est aussi caractérisée en ce que la concentration en poids sec de carbonate de calcium de la suspension aqueuse obtenue à l'issue de l'étape de broyage a) est comprise entre 35 % et 60 % du poids total de ladite suspension.

Cette utilisation est aussi caractérisée en ce que la concentration en poids sec de carbonate de calcium de la suspension aqueuse obtenue à l'issue de l'étape de concentration b) est comprise entre 61 % et 78 %, préférentiellement entre 70 % et 75 % du poids total de ladite suspension.

## EXEMPLES

### Préambule

Dans l'ensemble de la présente Demande, les caractéristiques granulométriques relatives au carbonate de calcium sont déterminées à partir d'un appareil Sedigraph™ 5100, commercialisé par la société MICROMERITICS™.

Le facteur de diffusion S de la lumière est déterminé selon la méthode donnée dans le document FR 2 885 906.

Les poids moléculaires, les teneurs molaires de chaînes polymériques dont le poids moléculaire est inférieur à une valeur donnée, sont déterminés selon la méthode suivante.

Une prise d'essai de la solution de polymère correspondant à 90 mg de matière sèche est introduite dans un flacon de 10 mL. Il est ajouté de la phase mobile, additionnée de 0,04 % de DMF, jusqu'à une masse totale de 10 g. La composition de cette phase mobile est la suivante : NaHCO3 : 0,05 mol/L, NaNO3 : 0,1 mol/L, triéthanolamine : 0,02 mol/L, NaN3 0,03 % massique.

La chaîne de CES est composée d'une pompe isocratique de type Waters™ 510, dont le débit est réglé à 0.8 mL/min, d'un passeur d'échantillons Waters 717+, d'un four contenant une précolonne de type « Guard Column Ultrahydrogel Waters™ », suivie d'une colonne linéaire de type « Ultrahydrogel Waters™ » de 30 cm de long et 7,8 mm de diamètre intérieur.

La détection est assurée par un réfractomètre différentiel de type Waters™ 410. Le four est porté à la température de 60°C, et le réfractomètre est porté à la température de 45°C.

La CES est étalonnée avec une série d'étalons polyacrylate de sodium fournis par Polymer Standard Service de poids moléculaire au sommet de pic compris entre 2 000 et $1.10^6$ g/mol et d'indice de polymolécularité compris entre 1,4 et 1,7, ainsi qu'avec un polyacrylate de sodium de poids moléculaire égal à 5 600 g/mole et d'indice de polymolécularité égal à 2,4.

La courbe d'étalonnage est de type linéaire et prend en compte la correction obtenue grâce au marqueur de débit (DMF).

L'acquisition et le traitement du chromatogramme sont effectués par l'utilisation du logiciel PSS WinGPC Scientific v 4.02. Le chromatogramme obtenu est intégré dans la zone correspondant à des poids moléculaires supérieurs à 65 g/mol.

**Exemple 1**

Cet exemple illustre la mise en oeuvre, dans un procédé de fabrication de carbonate de calcium par broyage puis concentration, d'un polymère selon l'invention ou selon l'art antérieur au cours de l'étape de broyage, un même polymère dispersant étant utilisé pendant l'étape de concentration. Il illustre l'influence des polymères mis en oeuvre pendant l'étape de broyage sur la stabilité des suspensions obtenues au final (mesure de certaines viscosités Brookfield™ à différents instants), de même que sur la distribution des tailles de particules -facteur de pente f = 100 * $(d_{25} / d_{75})$- et sur le coefficient de diffusion de la lumière (S).

Pour chacun des essais n° 1 à 10, on commence par broyer dans l'eau, selon les méthodes bien connues de l'homme du métier (on pourra se reporter au protocole de broyage tel que décrit dans le document WO 02 / 49765), un carbonate de calcium qui est un marbre de Carrare, de diamètre médian environ égal à 10 $\mu$m.

Cette première étape de broyage vise à obtenir une teneur en poids sec de carbonate de calcium égale à 50 % du poids total de la suspension. Elle est effectuée en présence de 0,45 % en poids sec d'un polymère selon les essais n° 1 à 10, par rapport au poids sec total de carbonate de calcium.

Dans une deuxième étape, la suspension est concentrée (élimination d'eau avec un évaporateur thermique de laboratoire de marque EPCON™).

Cette seconde étape de concentration vise à obtenir une teneur en poids sec de carbonate de calcium égale à 71 % du poids total de la suspension.

Cette étape de concentration est réalisée en présence de 0,25 % en poids sec par rapport au poids sec de carbonate de calcium, d'un mélange (70/30 ratio en poids sec) d'homopolymère de l'acide acrylique, de poids moléculaire égal à 10 400 g/mol, dont 100 % en moles des sites carboxyliques sont neutralisés par la soude, et d'acide phosphorique.

Essai n° 1

Cet essai illustre l'art antérieur et met en oeuvre un homopolymère de l'acide acrylique (selon le document WO 02 / 49765) obtenu par polymérisation radicalaire classique non suivi d'une séparation, dont 50 % en mole des sites carboxyliques sont neutralisés par le sodium, 15 % par le calcium et 15 % par le magnésium, de poids moléculaire égal à 9 600 g/mol, et dont 25 % en mole des chaînes polymériques présentent un poids moléculaire inférieur à 3 000 g/mol.

Essai n° 2

Cet essai illustre l'art antérieur et met en oeuvre un homopolymère de l'acide acrylique obtenu par polymérisation radicalaire classique non suivi d'une séparation, totalement neutralisé par la soude, de poids moléculaire égal à 3 100 g/mol, et dont 65 % en mole des chaînes polymériques présentent un poids moléculaire inférieur à 3 000 g/mol.

Essai n° 3

Cet essai illustre l'art antérieur et met en oeuvre un homopolymère de l'acide acrylique obtenu par polymérisation radicalaire classique suivi d'une séparation, totalement neutralisé par la soude, de poids moléculaire égal à 5 500 g/mol, et dont 37 % en mole des chaînes polymériques présentent un poids moléculaire inférieur à 3 000 g/mol.

Essai n° 4

Cet essai illustre l'art antérieur et met en oeuvre un homopolymère de l'acide acrylique obtenu par polymérisation radicalaire classique non suivi d'une séparation, totalement neutralisé par la soude, de poids moléculaire égal à 5 700 g/mol, et dont 40% en mole des chaînes polymériques présentent un poids moléculaire inférieur à 3 000 g/mol.

Essai n° 5

Cet essai illustre l'art antérieur et met en oeuvre un homopolymère de l'acide acrylique obtenu par voie RAFT, totalement neutralisé par la soude, de poids moléculaire égal à 8 150 g/mol, et dont 24 % en mole des chaînes polymériques présentent un poids moléculaire inférieur à 3 000 g/mol.

Essai n° 6

Cet essai illustre l'art antérieur et met en oeuvre un homopolymère de l'acide acrylique obtenu par polymérisation radicalaire classique non suivi d'une séparation, totalement neutralisé par la soude, de poids moléculaire égal à 9 400 g/mol, et dont 27 % en mole des chaînes polymériques présentent un poids moléculaire inférieur à 3 000 g/mol.

Essai n° 7

Cet essai illustre l'art antérieur et met en oeuvre un homopolymère de l'acide acrylique obtenu par polymérisation radicalaire classique non suivi d'une séparation, totalement neutralisé par la soude, de poids moléculaire égal à 33 100 g/mol, et dont 17 % en mole des chaînes polymériques présentent un poids moléculaire inférieur à 3 000 g/mol.

Essai n° 8

Cet essai illustre l'art antérieur et met en oeuvre un homopolymère de l'acide acrylique obtenu par voie RAFT, totalement neutralisé par la soude, de poids moléculaire égal à 31 000 g/mol, et dont 12 % en mole des chaînes polymériques présentent un poids moléculaire inférieur à 3 000 g/mol.

Essai n° 9

Cet essai illustre l'invention et met en oeuvre un homopolymère de l'acide acrylique obtenu par polymérisation radicalaire classique suivie d'une séparation, totalement neutralisé par la soude, de poids moléculaire égal à 11 500 g/mol, et dont 17 % en mole des chaînes polymériques présentent un poids moléculaire inférieur à 3 000 g/mol.

Essai n° 10

Cet essai illustre l'invention et met en oeuvre un homopolymère de l'acide acrylique obtenu par voie RAFT, totalement neutralisé par la soude, de poids moléculaire égal à 10 800 g/mol, et dont 18 % en mole des chaînes polymériques présentent un poids moléculaire inférieur à 3 000 g/mol.

Essai n° 11

Cet essai illustre l'invention et met en oeuvre un copolymère acide acrylique / acide méthacrylique (90 / 10 en % en poids) obtenu par polymérisation radicalaire classique suivie d'une séparation, totalement neutralisé par la soude, de poids moléculaire égal à 11 000 g/mol, et dont 16 % en mole des chaînes polymériques présentent un poids moléculaire inférieur à 3 000 g/mol.

Essai n° 12

Cet essai illustre l'invention et met en oeuvre un copolymère acide acrylique / acide méthacrylique (90 / 10 en % en poids) obtenu par voie RAFT, totalement neutralisé par la soude, de poids moléculaire égal à 9 000 g/mol, et dont 16 % en mole des chaînes polymériques présentent un poids moléculaire inférieur à 3 000 g/mol.

Dans le tableau 1, on a rappelé les caractéristiques des polymères mis en oeuvre pendant l'étape de broyage. On a aussi reporté les valeurs des extraits secs après l'étape a) de broyage et l'étape b) de concentration (respectivement notés $ES_a$ et $ES_b$), de même que les pourcentages en poids de particules dont les diamètres sont inférieurs à 1 $\mu$m et 2 $\mu$m (respectivement notés % < 1 $\mu$m et % < 2 $\mu$m).

| Essai n° | 1 | 2 | 3 | 4 | 5 |
|---|---|---|---|---|---|
| Art Antérieur / Invention (« IN ») | AA | AA | AA | AA | AA |
| $M_w$ (g/mol) | 9 600 | 3 100 | 5 500 | 5 700 | 8 150 |
| % < 3 000 g/mol | 25 | 65 | 37 | 40 | 24 |
| $ES_a$ (%) | 49,6 | 51,7 | 49,8 | 50 | 50 |
| $ES_b$ (%) | 71,3 | 71,2 | 71,0 | 71,1 | 71,0 |
| % < 1 µm | 73,2 | 73,7 | 74,9 | 73,9 | 73,2 |
| % < 2 µm | 96,2 | 95,6 | 93,3 | 96,0 | 96,0 |

| Essai n° | 6 | 7 | 8 | 9 | 10 |
|---|---|---|---|---|---|
| Art Antérieur / Invention (« IN ») | AA | AA | AA | IN | IN |
| Mw (g/mol) | 9 400 | 33 100 | 31 000 | 11 500 | 10 800 |
| % < 3 000 g/mol | 27 | 17 | 12 | 17 | 18 |
| ESa (%) | 50 | - | - | 50,5 | 51,4 |
| Esb (%) | 71,4 | - | - | 71,0 | 71,0 |
| % < 1 µm | 73,7 | - | - | 73,4 | 73,2 |
| % < 2 µm | 95,8 | - | - | 96,3 | 96,1 |

| Essai n° | 11 | 12 |
|---|---|---|
| Art Antérieur / Invention (« IN ») | IN | IN |
| Mw (g/mol) | 11 000 | 9 000 |
| % < 3 000 g/mol | 16 | 16 |
| ESa (%) | 51,0 | 51,1 |
| Esb (%) | 71,0 | 71,0 |
| % < 1 µm | 73,2 | 73,2 |
| % < 2 µm | 96,1 | 96,0 |

## Tableau 1

Les mesures n'ont pas pu être réalisées pour les essais n° 7 et 8, car le broyage n'a pas été possible. Ces polymères de poids moléculaire trop élevé ne permettent pas de broyer le carbonate de calcium jusqu'à un extrait sec proche de 50 %.

Dans un deuxième temps, pour les essais n° 1 à 6, et 9 à 12, on a déterminé la stabilité des suspensions obtenues, par mesure de leur viscosité Brookfield™ aux instants t=0 et t=8 jours (sans agitation préalable, à 25°C et à 10 tours / minute) notées respectivement $\mu_0$ et $\mu_8$ (mPa.s). Ces résultats sont reportés dans le tableau 2.

| Essai n° | 1 | 2 | 3 | 4 | 5 |
|---|---|---|---|---|---|
| Art Antérieur / Invention (« IN ») | AA | AA | AA | AA | AA |
| $M_w$ (g/mol) | 9 600 | 3 100 | 5 500 | 5 700 | 8 150 |
| % < 3 000 g/mol | 25 | 65 | 37 | 40 | 24 |
| $\mu_0$ (mPa.s) | 490 | 6 300 | 240 | 250 | 420 |
| $\mu_8$ (mPa.s) | 7 000 | 21 100 | 2 700 | 4 700 | 5 400 |

| Essai n° | 6 | 9 | 10 | 11 | 12 |
|---|---|---|---|---|---|
| Art Antérieur / Invention (« IN ») | AA | IN | IN | IN | IN |
| Mw (g/mol) | 9 400 | 11 500 | 10 800 | 11 000 | 9 000 |
| % < 3 000 g/mol | 27 | 17 | 18 | 16 | 16 |
| $\mu_0$ (mPa.s) | 300 | 560 | 350 | 550 | 650 |
| $\mu_8$ (mPa.s) | 9 300 | 2 400 | 3 100 | 3 200 | 3 200 |

## Tableau 2

On observe que les viscosités obtenues pour les essais n° 1, 2, 5 et 6 sont supérieures à 5 000 mPa.s après 8 jours ; la suspension aqueuse correspondante s'avère dès lors difficilement manipulable et notamment pompable. De tels essais ne satisfont pas l'homme du métier.

Dans un troisième et dernier temps, pour les suspensions où le broyage a pu être effectué, et pour lesquelles la viscosité Brookfield™ (à 25°C et à 10 tours / minute, 8 jours avant agitation) est inférieure à 5 000 mPa.s, on a déterminé leur facteur de pente f = 100 * ($d_{25}$ / $d_{75}$), ainsi que leur le coefficient de diffusion S de la lumière. Ces résultats figurent dans le tableau 3.

**Tableau 3**

| Essai n° | 3 | 4 | 9 | 10 | 11 | 12 |
|---|---|---|---|---|---|---|
| Art Antérieur / Invention (« IN ») | AA | AA | IN | IN | IN | IN |
| $M_w$ (g/mol) | 5 500 | 5 700 | 11 500 | 10 800 | 11 000 | 9000 |
| % < 3 000 g/mol | 37 | 40 | 17 | 18 | 16 | 16 |
| $d_{25}$ / $d_{75}$ * 100 | 31,0 | 30,4 | 32,3 | 34,0 | 32,0 | 32,0 |
| S ($m^2$/km) | 136 | 138 | 141 | 144 | 140 | 140 |

Le tableau 3 démontre clairement que seuls les essais n° 9 à 12 correspondant à l'invention conduisent à une amélioration notable du facteur de pente et donc de l'opacité.

En résumé, seuls les homopolymères et les copolymères de l'acide acrylique obtenus par voie RAFT ou par des techniques de séparation, et qui présentent la double caractéristique de posséder un poids moléculaire compris entre 8 000 g/mol et 15 000 g/mol d'une part et de présenter une teneur molaire inférieure à 20 % en chaînes polymériques ayant un poids moléculaire inférieur à 3 000 g/mol, permettent :

- de broyer le carbonate de calcium dans les conditions de l'exemple,

- en vue d'obtenir des suspensions dont le comportement rhéologique au bout de 8 jours est en accord avec les exigences de l'homme du métier,

- et dont le facteur de pente et le coefficient de diffusion S de la lumière ont été améliorés.

**Revendications**

1.  Utilisation, dans un procédé de fabrication d'une suspension aqueuse de carbonate de calcium naturel à travers :

    a) une étape de broyage,
    b) et éventuellement une étape de concentration en milieu aqueux,

    d'un homopolymère et /ou d'un copolymère de l'acide (méth)acrylique **caractérisé :**

    - **en ce qu'**il est mis en oeuvre pendant l'étape de broyage,
    - **en ce qu'**il présente un poids moléculaire compris entre 8 000 g/mol et 15 000 g/mol, préférentiellement entre 8 000 g/mol et 12 000 g/mol,
    - et **en ce qu'**il présente une teneur molaire en chaînes polymériques de poids moléculaire inférieur à 3 000 g/mol inférieure à 20 %, préférentiellement 15 %, très préférentiellement 10 %

    comme agent activateur d'opacité.

2.  Utilisation selon la revendication 1, **caractérisée en ce que** ledit homopolymère et/ou copolymère de l'acide (méth) acrylique est obtenu par polymérisation radicalaire en émulsion ou en solution, suivi par au moins une étape de séparation statique ou dynamique, ladite étape de séparation mettant en oeuvre un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

3.  Utilisation selon la revendication 1, **caractérisée en ce que** ledit homopolymère et/ou copolymère de l'acide (méth) acrylique est obtenu par polymérisation radicalaire contrôlée, préférentiellement par polymérisation par transfert réversible par addition fragmentation (RAFT).

4.  Utilisation selon l'une des revendications 1 à 3, **caractérisée en ce que** ledit homopolymère et/ou copolymère de l'acide (méth)acrylique est totalement acide, ou totalement ou partiellement neutralisé par un agent de neutralisation choisi parmi les hydroxydes de sodium, de potassium, les hydroxydes et/ou oxydes de calcium, de magnésium, l'ammoniaque, ou leurs mélanges, préférentiellement par un agent de neutralisation choisi parmi l'hydroxyde de sodium, de potassium, l'ammoniaque, ou leurs mélanges, très préférentiellement par un agent de neutralisation qui est l'hydroxyde de sodium.

5.  Utilisation selon l'une des revendications 1 à 4, **caractérisée en ce que**, outre l'acide (méth)acrylique, ledit copolymère de l'acide (méth)acrylique contient un autre monomère choisi parmi l'anhydride (meth)acrylique, le (méth) acrylamide, les esters (méth)acryliques et préférentiellement parmi les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés, le styrène, l'alpha-méthylstyrène, le styrène sulfonate, ou l'acide acrylamido-2-methyl-2-propane-sulfonique, les phosphates d'acrylate et de méthacrylate d'éthylène glycol, et leurs mélanges, et **en ce que** cet autre monomère est préférentiellement l'acrylamide.

6.  Utilisation selon l'une des revendications 1 à 5, **caractérisée en ce que** ledit homopolymère et/ou copolymère de l'acide (méth)acrylique est mis en oeuvre à raison de 0,1 à 1,0 %, préférentiellement de 0,2 à 0,6 % en poids sec, par rapport au poids sec de carbonate de calcium.

7.  Utilisation selon l'une des revendications 1 à 6, **caractérisée en ce que**, outre ledit homopolymère et/ou copolymère de l'acide (méth)acrylique, un autre homopolymère et/ou copolymère de l'acide (méth)acrylique est mis en oeuvre conjointement pendant l'étape de concentration b).

8.  Utilisation selon l'une des revendications 1 à 7, **caractérisée en ce que** la concentration en poids sec de carbonate de calcium de la suspension aqueuse obtenue à l'issue de l'étape de broyage a) est comprise entre 35 % et 60 % du poids total de ladite suspension.

9.  Utilisation selon l'une des revendications 1 à 8, **caractérisée en ce que** la concentration en poids sec de carbonate de calcium de la suspension aqueuse obtenue à l'issue de l'étape de concentration b) est comprise entre 61 % et 78 %, préférentiellement entre 70 % et 75 % du poids total de ladite suspension.

**Claims**

1. Use, in a method for manufacture of an aqueous suspension of natural calcium carbonate through:

   a) a grinding step,
   b) and possibly a step of concentration in an aqueous medium,

   of a homopolymer and/or of a copolymer of (meth)acrylic acid **characterised:**

   - **in that** it is implemented during the grinding step,
   - **in that** it has a molecular weight of between 8,000 g/mole and 15,000 g/mole, and preferentially between 8,000 g/mole and 12,000 g/mole,
   - and **in that** it has a molar polymeric chains content by molecular weight less than 3,000 g/mole less than 20%, preferentially 15%, very preferentially 10%

   as the activating opacity agent.

2. Use according to claim 1, **characterised in that** the said homopolymer and/or copolymer of (meth)acrylic acid is obtained by radical polymerisation in emulsion or in solution, followed by at least one static or dynamic step, where the said separation step uses one or more polar solvents preferentially belonging to the group constituted by water, methanol, ethanol, propanol, isopropanol, the butanols, acetone, tetrahydrofuran or their blends.

3. Use according to claim 1, **characterised in that** the said homopolymer and/or copolymer of (meth)acrylic acid is obtained by controlled radical polymerisation, preferentially by polymerisation by reversible addition-fragmentation transfer (RAFT).

4. Use according to one of the claims 1 to 3, **characterised in that** the said homopolymer and/or copolymer of (meth) acrylic acid is totally acid, or totally or partially neutralised by a neutralisation agent chosen from among the sodium or potassium hydroxides, the calcium or magnesium hydroxides and/or oxides, ammonium hydroxide, or their blends, preferentially by a neutralisation agent chosen from among sodium or potassium hydroxide, ammonium hydroxide, or their blends, and very preferentially by a neutralisation agent which is sodium hydroxide.

5. Use according to one of the claims 1 to 4, **characterised in that**, in addition to the (meth)acrylic acid, the said copolymer of (meth)acrylic acid contains another monomer chosen from among (meth)acrylic anhydride, (meth) acrylamide, the (meth)acrylic esters, and preferentially from among the methyl, ethyl, isopropyl, n-propyl, isobutyl, n-butyl, ter-butyl, or 2-ethylhexyl acrylates, the methyl or ethyl methacrylates, the hydroxylate methacrylates, styrene, alpha-methylstyrene, styrene sulfonate, or acrylamido-2-methyl-2-propane-sulphonic acid, the acrylate and methacrylate phosphates of ethylene glycol, and their blends, and **in that** this other monomer is preferentially acrylamide.

6. Use according to one of the claims 1 to 5, **characterised in that** the said homopolymer and/or copolymer of (meth) acrylic acid is used at a rate of 0.1 to 1.0%, and preferentially 0.2 to 0.6%, by dry weight, relative to the dry weight of calcium carbonate.

7. Use according to one of the claims 1 to 6, **characterised in that**, in addition to the said homopolymer and/or copolymer of (meth)acrylic acid, another homopolymer and/or copolymer of (meth)acrylic acid is used jointly during the concentration step b).

8. Use according to one of the claims 1 to 7, **characterised in that** the concentration by dry weight of calcium carbonate of the aqueous suspension obtained on conclusion of grinding step a) is between 35% and 60% of the total weight of the said suspension.

9. Use according to one of the claims 1 to 8, **characterised in that** the concentration by dry weight of calcium carbonate of the aqueous suspension obtained on conclusion of concentration step b) is between 61% and 78%, preferentially between 70% and 75%, of the total weight of the said suspension.

**Patentansprüche**

1. Verwendung in einem Verfahren zur Herstellung einer wässrigen Suspension von natürlichem Calciumcarbonat mittels:

   a) eines Mahlschritts,
   b) und gegebenenfalls eines Konzentrationsschritts in wässrigem Milieu,

   eines Homopolymers und/oder Copolymers von (Meth)Acrylsäure, **dadurch gekennzeichnet:**

   - **dass** es während des Mahlschritts eingesetzt wird,
   - **dass** es eine Molmasse zwischen 8000 g/mol und 15 000 g/mol, vorzugsweise zwischen 8000 g/mol und 12 000 g/mol aufweist,
   - und **dass** es einen Stoffmengengehalt an Polymerketten mit einer Molmasse unter 3000 g/mol von weniger als 20 %, vorzugsweise 15 %, sehr bevorzugt 10 % aufweist,

   als Mittel zur Aktivierung der Opazität.

2. Verwendung nach Anspruch 1, **dadurch gekennzeichnet, dass** das Homopolymer und/oder Copolymer von (Meth) Acrylsäure durch eine radikalische Polymerisation in Emulsion oder in Lösung erhalten wird, gefolgt von mindestens einem statischen oder dynamischen Abscheidungsschritt, wobei im Abscheidungsschritt ein oder mehrere polare Lösungsmittel verwendet werden, die vorzugsweise zu der aus Wasser, Methanol, Ethanol, Propanol, Isopropanol, den Butanolen, Aceton, Tetrahydrofuran oder Mischungen davon bestehenden Gruppe gehören.

3. Verwendung nach Anspruch 1, **dadurch gekennzeichnet, dass** das Homopolymer und/oder Copolymer von (Meth) Acrylsäure durch eine kontrollierte radikalische Polymerisation, vorzugsweise durch eine reversible Additions-Fragmentierungs-Kettenübertragungs- (RAFT-)Polymerisation, erhalten wird.

4. Verwendung nach einem der Ansprüche 1 bis 3, **dadurch gekennzeichnet, dass** das Homopolymer und/oder Copolymer von (Meth)Acrylsäure vollständig sauer oder durch ein Neutralisationsmittel, das ausgewählt ist aus den Hydroxiden von Natrium, Kalium, den Hydroxiden und/oder Oxiden von Calcium, Magnesium, Ammoniak oder Mischungen davon, vorzugsweise durch ein Neutralisationsmittel, das ausgewählt ist aus Natrium-, Kaliumhydroxid, Ammoniak oder Mischungen davon, sehr bevorzugt durch ein Neutralisationsmittel, bei dem es sich um Natriumhydroxid handelt, vollständig oder teilweise neutralisiert ist.

5. Verwendung nach einem der Ansprüche 1 bis 4, **dadurch gekennzeichnet, dass** das Copolymer von (Meth) Acrylsäure außer (Meth)Acrylsäure ein anderes Monomer enthält, das ausgewählt ist aus (Meth)Acrylsäureanhydrid, (Meth)Acrylsäureamid, (Meth)Acrylsäureestern und vorzugsweise aus Methyl-, Ethyl-, Isopropyl-, n-Propyl-, Isobutyl-, n-Butyl- tert.-Butyl-, 2-Ethylhexylacrylat, Methyl-, Ethylmethacrylat, den Hydroxymethacrylaten, Styrol, alpha-Methylstyrol, Styrolsulfonat oder Acrylamido-2-methyl-2-propansulfonsäure, Ethylenglycolacrylatphosphat und Ethylenglycolmethacrylatphosphat und Mischungen davon und wobei das andere Monomer vorzugsweise Acrylsäureamid ist.

6. Verwendung nach einem der Ansprüche 1 bis 5, **dadurch gekennzeichnet, dass** das Homopolymer und/oder Copolymer von (Meth)Acrylsäure in einer Menge von 0,1 bis 1,0 Trockengew.%, vorzugsweise 0,2 bis 0,6 Trockengew.-%, bezogen auf das Trockengewicht von Calciumcarbonat, verwendet wird.

7. Verwendung nach einem der Ansprüche 1 bis 6, **dadurch gekennzeichnet, dass** außer dem Homopolymer und/ oder Copolymer von (Meth)Acrylsäure ein anderes Homopolymer und/oder Copolymer von (Meth)Acrylsäure während des Konzentrationsschritts b) gleichzeitig eingesetzt wird.

8. Verwendung nach einem der Ansprüche 1 bis 7, **dadurch gekennzeichnet, dass** die Konzentration der am Ende des Mahlschritts a) erhaltenen wässrigen Suspension, bezogen auf das Trockengewicht von Calciumcarbonat, zwischen 35 % und 60 % des Gesamtgewichts der Suspension liegt.

9. Verwendung nach einem der Ansprüche 1 bis 8, **dadurch gekennzeichnet, dass** die Konzentration der am Ende des Konzentrationsschritts b) erhaltenen wässrigen Suspension, bezogen auf das Trockengewicht von Calciumcarbonat, zwischen 61 % und 78 %, vorzugsweise zwischen 70 % und 75 % des Gesamtgewichts der Suspension liegt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2539137
- FR 2683536
- FR 2683537
- FR 2683538
- FR 2683539
- FR 2683532
- FR 2683533
- WO 0249766 A
- US 2007197747 A
- EP 0894836 A
- EP 1579070 A
- WO 2007031870 A
- WO 2004026973 A
- FR 2885906
- US 4507422 A
- WO 02070571 A
- WO 2004014967 A
- WO 2005095466 A
- WO 0249765 A

### Littérature non-brevet citée dans la description

- **P. BURRI.** Pigment concepts for improved paper and print properties. *ATIP Conference,* 23 Juin 2000
- Dispersion of calcite by poly(sodium acrylate) prepared by reversible addition-fragmentation chain transfer (RAFT) polymerization. *Polymer,* 2005, vol. 46 (19), 8565-8572
- Synthesis and Characterization of Poly(acrylic acid) Produced by RAFT Polymerization. Application as a Very Efficient Dispersant of CaCO3,Kaolin, and TiO2. *Macromolecules,* 2003, vol. 36 (9), 3066-3077